# EUROPÄISCHE PATENTANMELDUNG

(11) **EP 3 059 630 A1**
(43) Veröffentlichungstag der Anmeldung: **24.08.2016**
(21) Anmeldenummer: 15155793.1
(22) Anmeldetag: 19.02.2015
(51) Int. Cl.: G02B 27/09, G06K 7/10

(54) **Beleuchtungseinheit für Codelesegeräte**

(71) Anmelder: VITRONIC Dr.-Ing. Stein Bildverarbeitungssysteme GmbH, 65189 Wiesbaden (DE)
(72) Erfinder: Hoffmann, Burghard, 65232 Taunusstein (DE); Ramsauer, Jörg, 55218 Ingelheim (DE)
(74) Vertreter: Neumann Müller Oberwalleney & Partner Patentanwälte

(57) **Zusammenfassung**

Beleuchtungseinrichtung 5, welche folgendes aufweist:
mehrere in einer Linie angeordnete Lichtquellen 7, jeweils eine Kondensorlinse 8 im Strahlengang 11 einer jeden Lichtquelle 7, die zumindest in einer ersten Ebene XZ lichtbündelnd ausgebildet ist, und eine Zylinderlinse 9, die in Strahlengangrichtung hinter den Kondensorlinsen 8 angeordnet ist und die in einer zweiten Ebene YZ, die winklig zur ersten Ebene XZ angeordnet ist, lichtbündelnd ausgebildet ist, dadurch gekennzeichnet, dass eine Streuoptik 10 mit einem Linsenraster vorgesehen ist, wobei die Streuoptik 10 in Strahlengangrichtung hinter der Zylinderlinse 9 angeordnet ist und in der ersten Ebene XZ lichtstreuend ausgebildet ist.

## Beschreibung

Die Erfindung betrifft eine Beleuchtungseinrichtung, die mehrere in einer Linie angeordnete Lichtquellen aufweist, wobei jeweils eine Kondensorlinse im Strahlengang einer jeden Lichtquelle angeordnet ist, die zumindest in einer ersten Ebene licht bündelnd ausgebildet ist. Ferner weist die Beleuchtungseinrichtung mindestens eine Zylinderlinse auf, die in Strahlengangrichtung hinter den Kondensorlinsen angeordnet ist und die in einer zweiten Ebene, die winkelig zur ersten Ebene angeordnet ist, lichtbündelnd ausgebildet ist.

Eine solche Beleuchtungseinheit ist aus der EP 1 742 168 A1 bekannt. Solche Beleuchtungseinrichtungen sind Bestandteil von optoelektronischen Sensoren, wie sie z. B. in der Logistik für die Erfassung von Codes, wie z. B. Strichcodes oder QR-Codes auf Paketen, eingesetzt werden. Einsatzgebiete solcher Codelesegeräte mit Beleuchtungseinrichtung sind insbesondere die Paketsortierung und -rückverfolgung bei Postund Kurierdiensten, Identifikationssysteme in automatischen Lagern, Gepäcksortiersystem auf Flughäfen, Warenbe- und entladesysteme und Qualitätsprüfung von Gegenständen.

Solche optoelektronischen Codelesegeräte weisen Kameras, bevorzugt Zeilenkameras, auf, an denen Pakete mittels eines Förderbands vorbeitransportiert werden. Hierbei wird eine Beleuchtungseinheit benötigt, die eine linienartige Ausleuchtung in Richtung des Erfassungsbereichs der Zeilenkamera aufweist. Hierbei ist insbesondere eine homogene Helligkeitsverteilung innerhalb der ausgeleuchteten Linie bzw. des ausgeleuchteten Streifens vorteilhaft, um die genaue Erfassung des Codes für die Zeilenkamera zu gewährleisten.

Die EP 1 742 168 A1 befasst sich mit dem Problem herkömmlicher Anordnungen, welche zur Ausleuchtung des Erfassungsbereiches Leuchtdioden aufweisen, die keine zusätzlich strahlformenden Elemente aufweisen und somit, insbesondere bei großen Entfernungen zwischen den Lichtquellen und dem Bereich der Ausleuchtung, eine geringe Effizienz bzw. geringe Helligkeit aufweisen und zudem keine gleichmäßige Ausleuchtung ermöglichen.

Um diesem Probleme zu begegnen, sind gemäß EP 1 742 168 A1 strahlformende optische Kondensorlinsen vorgesehen, die in der gesamten Anordnung gleichartig ausgeführt sind und eine der Lichtquelle zugewandte plane Grenzfläche und auf der gegenüberliegenden Seite eine sphärische, asphärische oder torische Oberfläche aufweisen. Mit fortschreitendem Abstand zu einer Empfangsoptik weisen die Leuchtdioden eine unterschiedliche außeraxiale Ausrichtung zur optischen Achse der jeweiligen Kondensorlinse auf. Durch diese spezielle Anordnung der außeraxialen Ausrichtung der Leuchtdioden zur optischen Achse der jeweiligen Kondensorlinsen kann die Hauptstrahlrichtung des von den Leuchtdioden abgegebenen Lichtes derart beeinflusst werden, dass ein ganz spezielles Beleuchtungsprofil erzeugt wird. Hierdurch können z. B. der Randabfall des Empfangsobjektivs ausgeglichen werden. Die Kondensorlinsen und die Zylinderlinse bilden zusammen eine anamorphotische Abbildungsoptik, die das Licht einer jeden Leuchtdiode zu einer Beleuchtungslinie formt. Jede Leuchtdiode bildet hierbei eine Beleuchtungslinie, wobei die Beleuchtungslinie der mehreren Leuchtdioden in einem Erfassungsbereich zu einer resultierenden Beleuchtungslinie überlagert werden. Die Art und Weise der Überlagerung der einzelnen Beleuchtungslinien wird derart beeinflusst, dass die Lichtverteilung in der resultierenden Beleuchtungslinie variieren kann.

DE 10 2008 019 084 A1 offenbart ebenfalls eine Beleuchtungseinrichtung, welche einen schmalen, langgestreckten Bereich mit hoher Intensität beleuchtet. Diese weist eine Vielzahl von nebeneinander auf einem ebenen Träger entlang einer Linie angeordnete Leuchtdioden auf. In einem Abstand zu den Leuchtdioden in Richtung eines Strahlenganges ist eine sich entlang der Linie erstreckende Konvertierungseinrichtung vorgesehen, die von den Leuchtdioden ausgehende Lichtstrahlen durch eine Vielzahl von lichtablenkenden Elementen in Lichtstrahlen konvertiert, deren Winkelverteilung zumindest in einer Ebene durchmischt sind. Als lichtablenkende Elemente kommen insbesondere streuende, brechende oder diffraktive Elemente zum Einsatz. Hierbei soll die Lichtablenkung der von den einzelnen Leuchtdioden ausgesandten Lichtstrahlen derart vorgenommen werden, dass eine direkte Sichtbarkeit der einzelnen Leuchtdioden bei Betrachtung mit einer Kamera vermieden werden. Um einen schmalen ausgeleuchteten Bereich zu erzielen, ist im Strahlengang hinter den lichtablenkenden Elementen eine Kondensorlinse vorgesehen, mit der eine Fokussierung des Lichts auf einen Streifen erzielt wird.

Nachteilig bei dieser Anordnung wirkt sich aus, dass Zylinderlinsen für nicht achsparallele Strahlen einen verhältnismäßig schlechten Wirkungsgrad aufweisen.

Aufgabe der vorliegenden Erfindung ist es daher, eine Beleuchtungseinrichtung vorzuschlagen, mit der ein schmaler linienförmiger oder streifenförmiger Bereich möglichst homogen und effizient ausgeleuchtet werden kann.

Die Aufgabe wird durch eine Beleuchtungseinrichtung gelöst, welche mehrere in einer Linie angeordnete Lichtquellen, jeweils eine Kondensorlinse im Strahlengang einer jeden Lichtquelle, die zumindest in einer ersten Ebene lichtbündelnd ausgebildet ist, und zumindest eine Zylinderlinse, die in Strahlengangrichtung hinter den Kondensorlinsen angeordnet ist und die in einer zweiten Ebene, die winkelig zur ersten Ebene angeordnet ist, lichtbündelnd ausgebildet ist, aufweist. Ferner ist eine Streuoptik vorgesehen, wobei die Streuoptik in Strahlengangrichtung hinter der Zylinderlinse angeordnet ist und in der ersten Ebene lichtstreuend ausgebildet ist.

Durch diese Anordnung ist gewährleistet, dass die Lichtstrahlen jeder einzelnen Lichtquelle zunächst in einer ersten Ebene durch die jeweiligen Kondensorlinsen gebündelt werden, wobei in den ersten Ebenen der einzelnen Lichtquellen der Strahlengang zumindest weniger divergent, insbesondere annähernd parallel verändert wird. Im weiteren Verlauf des Strahlengangs wird durch die mindestens eine Zylinderlinse in einer zweiten, winkelig zur ersten Ebene angeordneten zweiten Ebene der Strahlengang derart umgeformt, dass sich dieser in der zweiten Ebene ebenfalls weniger divergent, vorzugsweise annähernd parallel verhält. Erst im Anschluss an die Fokussierung der Lichtstrahlen der Lichtquellen findet eine Streuung der Lichtstrahlen in der ersten Ebene statt.

Vorzugsweise ist als Streuoptik ein Linsenraster vorgesehen.

Bei den Lichtquellen handelt es sich vorzugsweise um Leuchtdioden, welche im Licht zumindest in Teilbereichen des gesamten optischen Bereichs, d. h. von UV-Strahlung bis zu IR-Strahlung, ausstrahlen können. Hierbei können die Lichtquellen, insbesondere Leuchtdioden, in einer oder mehreren Reihen entlang der Linie angeordnet sein.

Bei der Kondensorlinse handelt es sich vorzugsweise um eine Plankonvexlinse in Form einer Zylinderlinse. Diese kann jeweils mit einer planen Grenzfläche zur Lichtfläche zugewandt und mit einer konvexen Grenzfläche von der Lichtquelle abgewandt sein.

Bei den Kondensorlinsen kann es sich jedoch auch um Fresnel-Linsen oder Hologrammfolien handeln.

Die zumindest eine Zylinderlinse kann ebenfalls als Fresnel-Linse oder Hologrammfolie ausgebildet sein.

Vorzugsweise weist die Beleuchtungseinrichtung eine einzige Zylinderlinse auf, die im Strahlengang aller Lichtquellen angeordnet ist.

In einer Ausgestaltung der Erfindung umfasst die Streuoptik ein Zylinderlinsenarray, ein Fresnel- Zylinderlinsenarray oder ein randomisiertes Fresnel-Prisma.

Ein bevorzugtes Ausführungsbeispiel wird im Folgenden anhand der Figuren näher erläutert. Hierin zeigen
- Figur 1: eine perspektivische Darstellung einer Förderbandanordnung zum Befördern von Paketen mit QR- oder Strichcodes und einem Codelesegerät mit einer Beleuchtungseinrichtung,
- Figur 2: eine schematische Darstellung der Beleuchtungseinrichtung gemäß Figur 1 in einer ersten Ebene XZ und
- Figur 3: eine schematische Darstellung einer Beleuchtungseinrichtung gemäß Figur 2 in einer weiteren Ansicht in einer zweiten Ebene YZ.

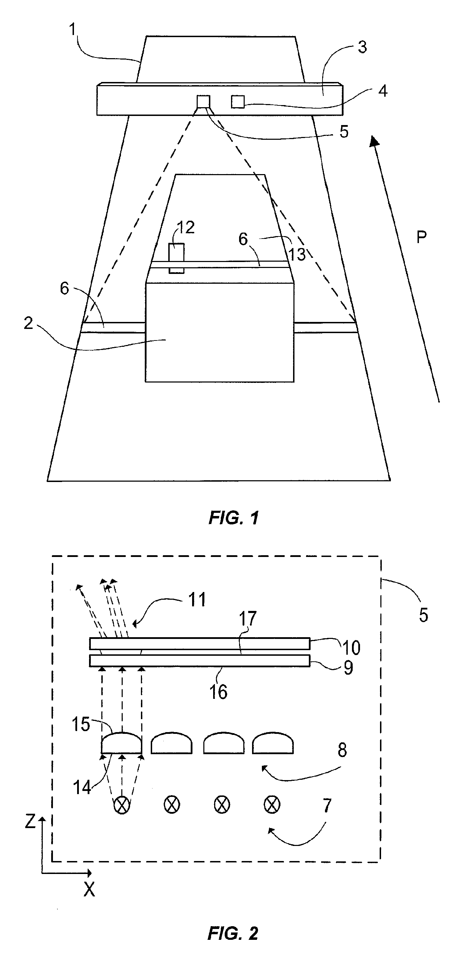

Figur 1 zeigt eine perspektivische Darstellung einer Fördereinrichtung für Pakete, wie sie z. B. in Paketsortierungsanlagen in der Logistik verwendet werden. Die Förderanlage umfasst ein Förderband 1, wobei auch alternativ mehrere hintereinander angeordnete Förderbänder oder angetriebene Förderrollen vorgesehen sein können. Das Förderband 1 dient zum Transportieren von Paketen 2 in Richtung einer Transportrichtung P. Oberhalb des Förderbandes 1 ist ein Codelesegerät 3 vorgesehen, das quer über das Förderband 1 verläuft. Das Codelesegerät 3 weist eine Zeilenkamera 4 und eine Beleuchtungseinrichtung 5 auf. Die Beleuchtungseinrichtung 5 projiziert einen Lichtstreifen 6 in Richtung auf das Förderband, wobei der Lichtstreifen 6 quer zur Transportrichtung P angeordnet ist und die gesamte Breite des Förderbandes 1 überdeckt. Somit ist sichergestellt, dass jedes Paket 2, das auf dem Förderband 1 angeordnet ist, den Lichtstreifen 6 passiert. Die Beleuchtungseinrichtung 5 strahlt hierbei vorzugsweise vertikal nach unten auf das Förderband 1 ab.

Die Zeilenkamera 4 weist einen Sichtbereich auf, der mit dem Lichtstreifen 6 übereinstimmt, so dass der Erfassungsbereich der Zeilenkamera 4 von den Lichtstreifen 6 ausgeleuchtet ist. Mittels der Zeilenkamera 4 lässt sich dann ein Code 12, der auf einer der Zeilenkamera 4 zugewandten Fläche 13 des Pakets 2 angeordnet ist, erfassen, um ihn in einer Auswerteeinheit erkennen zu können. Um ein möglichst sicheres und genaues Erkennen von Codes, wie z. B. QR-codes oder Strichcodes, zu gewährleisten, müssen diese von der Zeilenkamera 4 in bestmöglicher Qualität wiedergegeben werden. Hierzu ist eine möglichst homogene Ausleuchtung über die gesamte Länge des Lichtstreifens 6 zu gewährleisten.

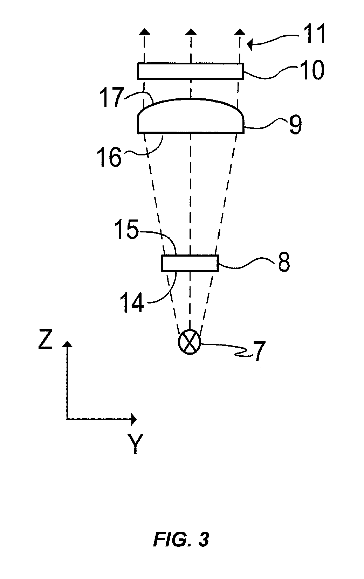

Die Figuren 2 und 3 zeigen schematisch den Aufbau der Beleuchtungseinrichtung 5 in zwei unterschiedlichen Ansichten, nämlich in einer ersten Ebene XZ (Figur 2) sowie in einer senkrecht zur ersten Ebene angeordneten zweiten Ebene YZ (Figur 3).

Die Beleuchtungseinrichtung 5 umfasst mehrere Lichtquellen 7, die in einer Linie nebeneinander angeordnet sind. Die Lichtquellen 7 können auch in mehreren Reihen entlang einer Linie angeordnet sein. Bei den Lichtquellen 7 kann es sich insbesondere um LEDs handeln. Jeder Lichtquelle 7 ist eine Kondensorlinse 8 zugeordnet, welche sich im Strahlengang 11 der jeweiligen Lichtquelle 7 befindet. Der Strahlengang 11 einer der Lichtquellen 7 ist in Figur 2 und in Figur 3 dargestellt. Das sich divergent ausbreitende Licht der Lichtquellen 7 wird von den Kondensorlinsen 8 derart gebündelt, dass sich ein zumindest annähernd paralleler oder konvergenter Strahlengang hinter den Kondensorlinsen 8 einstellt. Bei den Kondesorlinsen kann es sich um Zylinderlinsen oder Fresnel-Linsen handeln. In den Figuren sind Zylinderlinsen dargestellt. Diese sind derart ausgebildet, dass sie den Strahlengang 11 in der ersten Ebene XZ bündeln und in der zweiten Ebene YZ nicht beeinflussen. Hierzu weisen die Kondensorlinsen 8 jeweils eine der Lichtquelle zugeordnete plane Grenzfläche 14 und eine der jeweiligen Lichtquelle 7 abgewandte konvexe Grenzfläche 15 auf. Die konvexe Grenzfläche 15 ist zylinderabschnittsförmig gestaltet, wobei sie in der ersten Ebene XZ einen gebogenen Querschnitt aufweist und in der zweiten Ebene YZ im Querschnitt nicht gekrümmt ist.

Der Strahlengang zwischen den Kondensorlinsen 8 und der Zylinderlinsen 9 ist demnach zwar in der ersten Ebene XZ zumindest annähernd parallel, nicht jedoch in der zweiten Ebene YZ gemäß Figur 3. Der Strahlengang wird daher durch die Zylinderlinse 9 in der zweiten Ebene YZ fokussiert, wobei die Zylinderlinse 9 eine um 90° zu den Kondensorlinsen 8 gedrehte optisch beeinflussende Ausprägung aufweist. Hierzu weist die Zylinderlinse 9 jedenfalls eine plane Grenzfläche 16 auf, die den Lichtquellen 7 zugewandt ist und eine konvexe Grenzfläche 17 auf, die von den Lichtquellen 7 abgewandt ist. In der ersten Ebene XZ ist die konvexe Grenzfläche 17 im Querschnitt nicht gekrümmt. Im Querschnitt ist die konvexe Grenzfläche 17 in der zweiten Ebene YZ gekrümmt, so dass sich eine Strahlengangbeeinflussung lediglich in der zweiten Ebene YZ ergibt, um in Strahlengangrichtung hinter der Zylinderlinse 9 einen Strahlengang zu erzeugen, der sowohl bzgl. der ersten Ebene XZ als auch bzgl. der zweiten Ebene YZ zumindest annähernd parallel verläuft.

In Richtung des Strahlengangs schließt sich an die Zylinderlinse 9 eine Streuoptik 10 an, die derart ausgebildet ist, dass sie die Lichtstrahlen in der ersten Ebene XZ streut, nicht jedoch in der zweiten Ebene YZ. Somit ist sichergestellt, dass der sich ergebende Lichtstreifen eine schmale Breite aufweist, jedoch in seiner Länge innerhalb der ersten Ebene XZ eine homogene Ausleuchtung aufweist. Bei der Streuoptik kann es sich insbesondere um ein Zylinderlinsenarray, ein Fesnel-Zylinderlinsenarray oder ein randomisiertes Fresnel-Prisma handeln.

### Bezugszeichenliste

- 1: Förderband
- 2: Paket
- 3: Codelesegerät
- 4: Zeilenkamera
- 5: Beleuchtungseinrichtung
- 6: Lichtstreifen
- 7: Lichtquelle
- 8: Kondensorlinse
- 9: Zylinderlinse
- 10: Streuoptik
- 11: Strahlengang
- 12: Code
- 13: Fläche
- 14: plane Grenzfläche der Kondensorlinse
- 15: konvexe Grenzfläche der Kondensorlinse
- 16: plane Grenzfläche der Zylinderlinse
- 17: konvexe Grenzfläche der Zylinderlinse

- P: Transportrichtung
- XZ: erste Ebene
- YZ: zweite Ebene

## Patentansprüche

1. Beleuchtungseinrichtung (5), welche folgendes aufweist:
mehrere in einer Linie angeordnete Lichtquellen (7),
jeweils eine Kondensorlinse (8) im Strahlengang (11) einer jeden Lichtquelle (7), die zumindest in einer ersten Ebene 8 (XZ) lichtbündelnd ausgebildet ist, und
zumindest eine Zylinderlinse (9), die in Strahlengangrichtung hinter den Kondensorlinsen (8) angeordnet ist und die in einer zweiten Ebene (YZ), die winklig zur ersten Ebene (XZ) angeordnet ist, lichtbündelnd ausgebildet ist,
**dadurch gekennzeichnet,**
**dass** eine Streuoptik (10) in Strahlengangrichtung hinter der Zylinderlinse (9) angeordnet ist und in der ersten Ebene (XZ) lichtstreuend ausgebildet ist.

2. Beleuchtungseinrichtung (5) nach Anspruch 1,
**dadurch gekennzeichnet,**
**dass** eine Streuoptik (10) ein Linsenraster aufweist.

3. Beleuchtungseinrichtung (5) nach einem der vorangehenden Ansprüche,
**dadurch gekennzeichnet,**
**dass** die Lichtquellen (7) jeweils zumindest eine Leuchtdiode umfassen.

4. Beleuchtungseinrichtung (5) nach einem der vorangehenden Ansprüche,
**dadurch gekennzeichnet,**
**dass** die Kondensorlinsen (8) als Plankonvexlinsen ausgestaltet sind.

5. Beleuchtungseinrichtung nach Anspruch 3,
**dadurch gekennzeichnet,**
**dass** die Kondensorlinsen (8) jeweils mit einer planen Grenzfläche (14) der Lichtquelle (7) zugewandt sind und mit einer konvexen Grenzfläche (15) von der Lichtquelle (7) abgewandt sind.

6. Beleuchtungseinrichtung (5) nach einem der vorangehenden Ansprüche,
**dadurch gekennzeichnet,**
**dass** die Zylinderlinse (9) als Fresnel-Linse ausgestaltet ist.

7. Beleuchtungseinrichtung (5) nach einem der vorangehenden Ansprüche,
**dadurch gekennzeichnet,**
**dass** die Beleuchtungseinrichtung (5) eine einzige Zylinderlinse (9) aufweist, die im Strahlengang (11) aller Lichtquellen (7) angeordnet ist.

8. Beleuchtungseinrichtung (5) nach einem der vorangehenden Ansprüche,
**dadurch gekennzeichnet,**
**dass** die Streuoptik (10) ein Zylinderlinsenarray, Fresnel-Zylinderlinsenarray oder ein randomisiertes Fresnel-Prisma umfasst.
